# EUROPEAN PATENT APPLICATION

(11) **EP 2 309 699 A1**
(43) Date of publication of application: **13.04.2011**
(21) Application number: 10175233.5
(22) Date of filing: 03.09.2010
(51) Int. Cl.: H04L 29/08, G06Q 30/00

(54) **Method and system for providing advertisement**

(30) Priority: 12.10.2009 KR 20090096947
(71) Applicant: Samsung Electronics Co., Ltd., Suwon-si, Gyeonggi-do (KR)
(72) Inventor: Yoo, Jung Jin, Gyeonggi-do (KR)
(74) Representative: Jenkins, Richard Gavin

(57) **Abstract**

An advertisement providing method and system may allow improving the frequency of advertising exposure. In a method for providing an advertisement, a client sends a request message to a server. The request message requests an action of the server. The server determines whether an error occurs when performing the action. If the error occurs, the server extracts advertisement data based on information in the request message. The server creates a response message by combining the extracted advertisement data with error occurrence information, and sends the response message to the client.

## Description

### BACKGROUND OF THE INVENTION

### 1. Field of the Invention:

The present invention relates to a method and system for providing an advertisement, and more particularly to a method and system for providing an advertisement based on a HyperText Transfer Protocol (HTTP) message.

### 2. Description of the Related Art:

Nowadays, a great variety of advertisements are provided through wired and wireless networks. Advertisers typically register their advertisements in a specific server such as a web server in wired and wireless networks, and consumers may be provided with such advertisements through access to that server.

However, since a web page offered by such a server generally contains many advertisements at once, each individual advertisement rarely attracts consumers' attention. Therefore, a conventional technique to provide advertisements through web pages may be insufficient to persuade consumers to purchase or take some action upon products or services.

### SUMMARY OF THE INVENTION

An aspect of the present invention is to address the above-mentioned problems and/or disadvantages and to provide at least the advantages described below. Accordingly, an aspect of the present invention is to provide a method and system for improving the frequency of advertising exposure.

In accordance with an aspect of the present invention, a method for providing an advertisement is provided. The method includes, at a client, sending a request message to a server, the request message requesting an action of the server, at the server, determining whether an error occurs when performing the action, if the error occurs, at the server, extracting advertisement data based on information in the request message, at the server, creating a response message by combining the extracted advertisement data with error occurrence information;, and at the server, sending the response message to the client.

In accordance with another aspect of the present invention, a system for providing an advertisement is provided. The system includes a client for sending a request message to a server, the request message requesting an action of the server, a database for storing advertisement data, and a server for receiving the request message from the client, for performing the action according to the received request message, for determining whether an error occurs, for extracting the advertisement data from the database based on at least one information in the request message if the error occurs, for creating a response message by combining the extracted advertisement data with error occurrence information, and for sending the response message to the client.

In accordance with another aspect of the present invention, a server is provided. The server includes a communication unit for communicating with a client, an action performance unit for performing an action specified in a request message sent to the server from the client, and for determining that an error has occurred when the action cannot be performed, a response message creation unit for, when the action performance unit determines that the error has occurred, generating a response message including information about the error and an extracted advertisement, and for transmitting the response message to the client via the communication unit.

Aspects of this invention not only improve the frequency of advertizing exposure, but also promote utilization of error pages.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages and certain exemplary embodiments of the present invention will be more apparent from the following description taken in conjunction with the accompanying drawings, in which:

FIG. 1 is a block diagram illustrating an advertisement providing system according to an exemplary embodiment of the present invention.

FIG. 2 is a block diagram illustrating a server in an advertisement providing system according to an exemplary embodiment of the present invention.

FIG. 3 is a flow diagram illustrating an advertisement providing method according to an exemplary embodiment of the present invention.

FIG. 4 is a block diagram illustrating an advertisement providing system according to an exemplary embodiment of the present invention.

FIG. 5 is a block diagram illustrating a server in an advertisement providing system according to an exemplary embodiment of the present invention.

FIG. 6 is a flow diagram illustrating an advertisement providing method according to an exemplary embodiment of the present invention.

FIG. 7 is an example view illustrating a display screen of a client according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding, but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions are omitted for clarity and conciseness.

The terms and words used in the following description and claims are not limited to the bibliographical meanings, but are merely used by the inventor to enable a clear and consistent understanding of the invention. Accordingly, it should be apparent to those skilled in the art that the following description of exemplary embodiments of the present invention are provided for illustration purposes only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

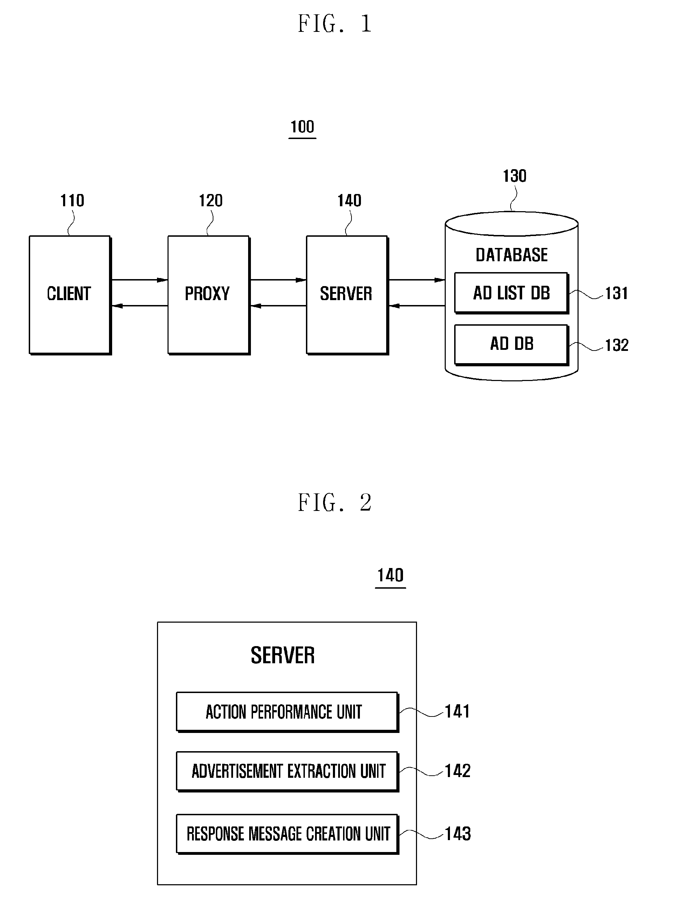

FIG. 1 is a block diagram illustrating an advertisement providing system according to an exemplary embodiment of the present invention.

Referring to FIG. 1, the advertisement providing system 100 includes a client 110, a proxy 120, a database 130, and a server 140.

The client 110 is user equipment (or a terminal) that transmits a request message based on HyperText Transfer Protocol (HTTP) to the server 140. The client 110 of this exemplary embodiment may be any communication device capable of accessing a wired or wireless network. For example, the client 110 may be a personal computer, such as a desktop, a laptop, and a notebook; a wireless communication terminal; or any other portable device allowing a wireless Local Area Network (LAN) access, such as a Personal Digital Assistant (PDA), a Portable Multimedia Player (PMP), a smart phone, and an MP3 player.

The client 110 sends a request message to the server 140 through the proxy 120 in order to request the server 140 to perform an action. The request message includes a start line, a header, and an entity body.

The start line contains a method, a request Uniform Resource Locator (URL), and an HTTP version. The method refers to information about a particular action to be performed by the server 140. The request URL refers to information about a resource required for the server 140 to perform the method. The HTTP version refers to information about a protocol version on which an HTTP application depends when performing a given action.

The header includes a general header and a request header. The general header contains a message creation date, time information, and message encoding information. The request header contains client identifying information (e.g., IP address) for identifying the client 110, host information indicating a port number and a host name of a requested resource, and authorization information for receiving authorization.

The entity body is a region that contains data. When the client 110 requests the server 140 to send data, the request message has no entity body. When the client 110 requests the server 140 to register data, the request message has the entity body. Normally, the entity body includes an entity header that offers information about a data type of the entity body. The entity header may contain 'Allow' corresponding to a list of methods supported by a resource of the request URL, 'location' redirecting a recipient's direction to identify a new resource, 'content-Encoding' indicating information about content coding applied to the entity body, 'content-Language' indicating information about language used in the entity body, and the like.

The proxy 120 is a type of assistant server that acts as an intermediary between the client 110 and the server 140. The proxy 120 receives the request message from the client 110 and delivers the request message to the server 140. In accordance with an exemplary embodiment of the present invention, the proxy 120 may perform a given authorization process by analyzing the request message of the client 110. Since the proxy 120 mediates message transmission between the client 110 and the server 140, the proxy 120 may be sometimes omitted according to a system configuration.

The database 130 is a type of storage for storing data the server 140 will provide at the request of the client 110. The database 130 includes an advertisement list database 131 and an advertisement database 132. The advertisement list database 131 stores a list of advertisement data stored in the advertisement database 132. Additionally, the advertisement list database 131 classifies and stores advertisement list data by a given classification criteria. For example, the advertisement list database 131 may classify and store advertisement list data by client, by host contained in the request message, or by request URL. The advertisement database 132 stores substantial data of advertisements.

The server 140 receives the request message from the client 110 through the proxy 120. After performing a particular action requested by the client 110, the server 140 creates and sends a response message to the client 110. The response message includes a start line, a header, and an entity body.

The start line contains an HTTP version, a status code, and a reason phrase. The HTTP version refers to information about a protocol version on which an HTTP application depends when performing a given action. The status code indicates the result of performing a given action at the request of the client 110. The reason phrase refers to text information that describes the status code. The reason phrase and the status code may be in one-to-one correspondence.

The header includes a general header and a response header. The general header contains a message creation date, time information, and message encoding information. The response header contains information about the type of server 140. The response header may contain 'Age' corresponding to elapsed time after the server 140 creates the response message, 'public' indicating information about methods supported by the server 140, 'warning' indicating information about any response status not classified as the status code, and the like. The entity body of the response message may be the same as that of the request message discussed earlier.

FIG. 2 is a block diagram illustrating a server in an advertisement providing system according to an exemplary embodiment of the present invention.

Referring to FIG. 2, the server 140 includes an action performance unit 141, an advertisement extraction unit 142, and a response message creation unit 143.

The action performance unit 141 performs a particular action requested by the client 110 when receiving the request message from the client 110. For example, the action performance unit 141 finds a particular action requested by the client 110 by checking the method contained in the request message and performs the corresponding action. If the method corresponds to 'GET' requesting transmission of a resource, the action performance unit 141 retrieves a resource requested by the client 110 through the method ('GET') and other information, such as the host and the request URL contained in the request message. If a resource requested by the client 110 is successfully retrieved, the action performance unit 141 sends a retrieved resource and information indicating that a requested action has been successfully performed to the response message creation unit 143. If a resource requested by the client 110 is not successfully retrieved, the action performance unit 141 recognizes the occurrence of an error and sends information indicating the occurrence of an error to the response message creation unit 143.

HTTP typically defines status codes indicating errors. For example, the status codes of client errors are defined from '400' to `415', and the status codes for server errors are defined from '500' to '505'. The client error indicates that an error occurs in the client 110. Client errors include an improper format of the request message or a failure to retrieve a resource corresponding to the request URL. The server error indicates that an error occurs in the server 140. Server errors include a failure to support functions required to perform a request of the client 110 or a failure to perform a request of the client 110 due to a temporary overload or server maintenance. If an error occurs, the action performance unit 141 not only sends information indicating the occurrence of an error to the response message creation unit 143, but also sends information about the request message, received from the client 110, to the advertisement extraction unit 142.

The advertisement extraction unit 142 extracts advertisement data from the database 130. The advertisement extraction unit 142 extracts advertisement list data from the database 130 and then extracts advertisement data according to the extracted advertisement list data. When receiving information about the request message from the action performance unit 141, the advertisement extraction unit 142 extracts advertisement list data corresponding to information about the request message from the advertisement list database 131. For example, if the advertisement list database 131 stores advertisement lists of interest fields by client, the advertisement extraction unit 142 extracts advertisement list data corresponding to the client 110 through the client identifying information. Alternatively, if the advertisement list database 131 stores advertisement lists of related fields by host or request URL, the advertisement extraction unit 142 extracts advertisement list data corresponding to the host or the request URL contained in the request message. In addition, the advertisement extraction unit 142 extracts substantial advertisement data from the advertisement database 132, depending on the extracted advertisement list data. The advertisement extraction unit 142 sends the extracted advertisement data to the response message creation unit 143.

The response message creation unit 143 creates the response message to be sent to the client 110. When receiving a retrieved resource and information from the action performance unit 141 indicating that an action requested by the client 110 has been successfully performed , the response message creation unit 143 creates the response message based on the retrieved resource, the reason phrase (e.g., '200(OK)') and the status code classified into a category of `Successful' among the status codes defined in HTTP. Alternatively, when receiving information indicating the occurrence of an error from the action performance unit 141 and also receiving the extracted advertisement data from the advertisement extraction unit 142, the response message creation unit 143 creates the response message by combining information about error occurrence and the advertisement data. According to an exemplary embodiment of the present invention, the response message creation unit 143 may create an error message when receiving information about error occurrence from the action performance unit 141, and, when receiving the extracted advertisement data from the advertisement extraction unit 142, may create the response message by combining the received advertisement data with the error message.

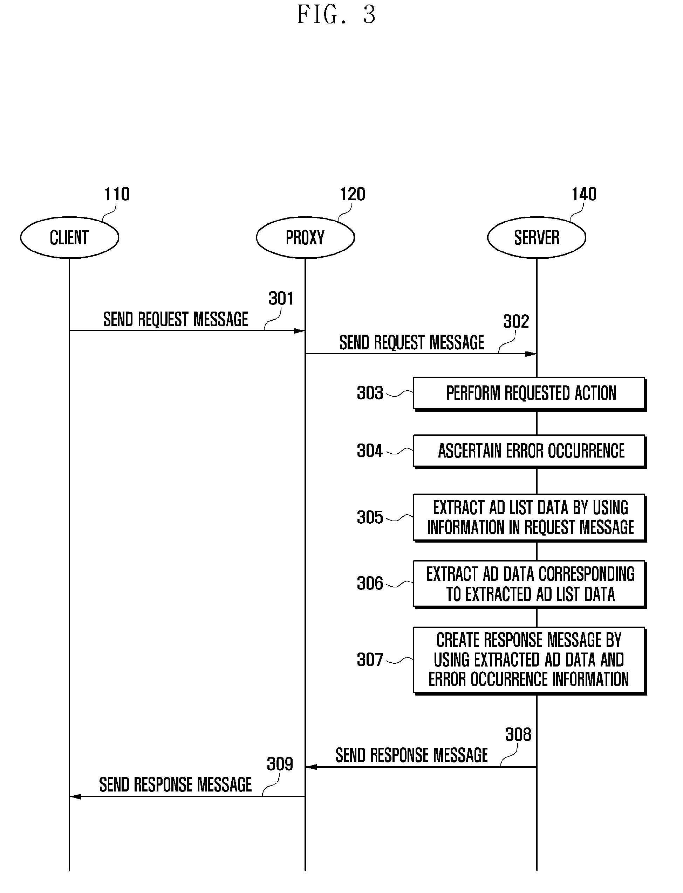

FIG. 3 is a flow diagram illustrating an advertisement providing method according to an exemplary embodiment of the present invention.

Referring to FIG. 3, a client 110 sends the request message to a proxy 120 in order to request a server 140 to perform a given particular action in step 301. The proxy 120 receives the request message from the client 110 and sends the request message to the server 140 in step 302. The server 140 receives the request message from the proxy 120, and an action performance unit 141 in the server 140 performs a particular action according to the request message in step 303. The action performance unit 141 can find a particular action requested by the client 110 by checking the method contained in the request message. An exemplary embodiment of the present invention supposes that the method is set to 'GET' requesting transmission of a resource among methods defined in HTTP. The action performance unit 141 ascertains that the method is set to 'GET', and retrieves a resource requested by the client 110 through the host and the request URL contained in the request message. Such resources may be stored in the database 130, an internal database in the server 140, or a separate external database. If the action performance unit 141 successfully retrieves a requested resource, the action performance unit 141 sends a retrieved resource and information indicating successful retrieval of the resource to a response message creation unit 143 in the server 140.

If the action performance unit 141 does not successfully retrieve the requested resource, the action performance unit 141 ascertains that an error occurs, and sends information (such as a status code indicating the occurrence of an error) to the response message creation unit 143. Typical HTTP status codes include client errors defined as status codes from '400' to `415' and server errors defined as status codes from '500' to '505'.

For example, the action performance unit 141 determines that an error occurs when recognizing that there is a problem in the request of the client 110 because of a failure to read the request message (status code 400 (Bad Request)), a denial of the completion of performing an action (status code 403 (Forbidden)), a failure to find a resource corresponding to the request URL (status code 404 (Not Found)), and the like. The action performance unit 141 may also determine that an error occurs when recognizing that it is impossible to transact the request of the client 110 because of an unexpected situation not permitting the transaction of the request of the client 110 (status code 500 (Internal Server Error)), a failure to support functions required to perform the request of the client 110 (status code 501 (Not Implemented)), a failure to transact the request of the client 110 due to a temporary overload or maintenance (status code 503 (Service Unavailable)), and the like. According to the example described herein, the action performance unit 141 may fail to successfully implement the request of the client 110 due to any problem in the client 110 or the server 140, but other types of errors may also occur and be handled in a similar manner.

The action performance unit 141 ascertains that an error occurs in step 304. The action performance unit 141 sends information indicating the occurrence of an error to the response message creation unit 143 and also sends information about the request message to the advertisement extraction unit 142. According to an exemplary embodiment of the present invention, the action performance unit 141 may send error occurrence information as well as information about the request message to the advertisement extraction unit 142. The action performance unit 141 may also send the client identifying information, the host, and the request URL among information contained in the request message to the advertisement extraction unit 142.

The advertisement extraction unit 142 extracts advertisement list data from the advertisement list database 131 based on information about the request message in step 305. When receiving the client identifying information from the action performance unit 141, the advertisement extraction unit 142 may extract advertisement list data corresponding to the received client identifying information.

According to an exemplary embodiment of the present invention, the advertisement list database 131 may store advertisement lists of interest fields by client, and the advertisement extraction unit 142 extracts advertisement list data corresponding to the client 110, which has sent the request message, from the advertisement list database 131. If receiving the host or the request URL from the action performance unit 141, the advertisement extraction unit 142 may extract advertisement list data related to the host or the request URL contained in the request message.

According to another exemplary embodiment of the present invention, the advertisement list database 131 may store advertisement lists of related fields by host or request URL, and the advertisement extraction unit 142 may extract advertisement list data corresponding to the host or the request URL contained in the request message. If receiving the client identifying information, the host, and the request URL together from the action performance unit 141, the advertisement extraction unit 142 may extract both advertisement list data corresponding to the client identifying information and advertisement list data corresponding to the host and the request URL. In this case, the advertisement extraction unit 142 may extract only advertisement list data that entirely satisfies the client identifying information, the host, and the request URL.

The advertisement extraction unit 142 extracts advertisement data corresponding to the extracted advertisement list data from the advertisement database 132 in step 306. The advertisement database 132 stores substantial data forming an advertisement, so that the advertisement extraction unit 142 can extract substantial advertisement data corresponding to advertisement list data extracted from the advertisement list database 131. Then the advertisement extraction unit 142 sends the extracted advertisement data to the response message creation unit 143.

The response message creation unit 143 creates the response message based on the advertisement data received from the advertisement extraction unit 142 and the error occurrence information received from the action performance unit 141 in step 307. According to an exemplary embodiment of the present invention, the response message creation unit 143 may create an error message when receiving the error occurrence information from the action performance unit 141, and may create the response message by combining the advertisement data with the error message when receiving the advertisement data from the advertisement extraction unit 142.

The server 140 sends the response message to the proxy 120 in step 308, and the proxy 120 sends the response message to the client 110 in step 309. The client 110 receives the response message from the proxy 120 and displays the received response message. The client 110 displays both error occurrence information and advertisement in a single screen view. Accordingly, a user can see an advertisement while perceiving the occurrence of an error through the displayed response message.

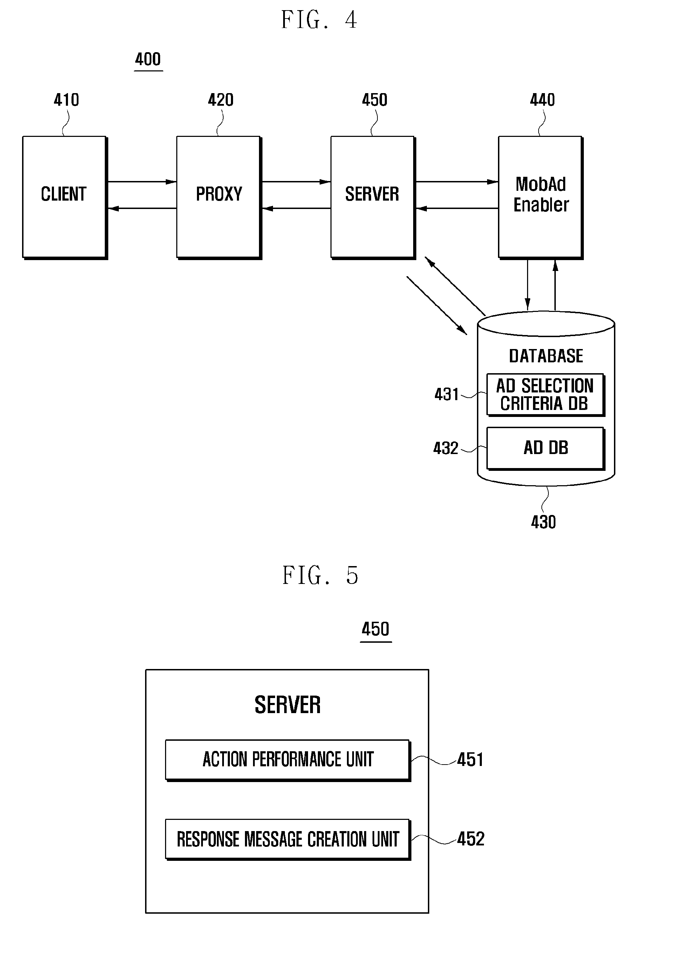

FIG. 4 is a block diagram illustrating an advertisement providing system according to an exemplary embodiment of the present invention.

Referring to FIG. 4, a client is a terminal using a wireless network. In the exemplary embodiment shown in FIG. 4, a Mobile Advertising (MobAd) enabler proposed in the Open Mobile Alliance (OMA) standard is combined with an advertisement providing system 400.

Referring to FIG. 4, the advertisement providing system 400 includes a client 410, a proxy 420, a database 430, a MobAd enabler 440, and a server 450. The client 410 and the proxy 420 are similar to a client 110 and a proxy 120, respectively, discussed above, and further description of the client 110 and the proxy 120 are thus omitted for brevity.

The database 430 is a type of storage for storing data the server 450 will provide at the request of the client 410. The database 430 includes an advertisement selection criteria database 431 and an advertisement database 432. The advertisement selection criteria database 431 stores information about criteria for selecting advertisement data stored in the advertisement database 432. According to an exemplary embodiment of the present invention, the advertisement selection criteria database 431 may include Contextualisation & Personalisation Resource (C&PR) storing user information (e.g., user profile) proposed in the OMA standard, Ad Metadata including advertisement identifying information (e.g., advertisement category, advertisement type, expiration, related keyword), and MobAd Rule indicating information about rules for selecting and offering advertisements. The advertisement database 432 stores substantial data of advertisements.

The MobAd enabler 440 selects advertisement data and provides the selected data to the server 450. The MobAd enabler 440 may include an Ad server and an Ad engine. The Ad server and the Ad engine select advertisement data through a Service Provider Application (SP App) and an Advertising Application (Ad App), respectively, and offer the selected data to the server 450. The MobAd enabler 440 receives information about the request message of the client 410 from the server 450, extracts advertisement data based on the received information, and sends the extracted data to the server 450. When receiving information about the request message, the MobAd enabler 440 extracts advertisement selection criteria data corresponding to the received information about the request message from the advertisement selection criteria database 431. The MobAd enabler 440 may extract advertisement selection criteria data corresponding to the client identifying information from C&PR in the advertisement selection criteria database 431. Alternatively, the MobAd enabler 440 may extract advertisement selection criteria data corresponding to the host or the request URL contained in the request message from Ad Metadata or MobAd Rule in the advertisement selection criteria database 431.

The server 450 receives the request message from the client 410 through the proxy 420. After performing a particular action requested by the client 410, the server 450 creates and sends a response message to the client 410, such as the response message described above with respect to FIG. 1. The server 450 is described below with respect to FIG. 5.

FIG. 5 is a block diagram illustrating a server in an advertisement providing system according to an exemplary embodiment of the present invention.

Referring to FIG. 5, the server 450 includes an action performance unit 451 and a response message creation unit 452. The server 450 may also include additional units.

The action performance unit 451 performs a particular action requested by a client 410 when receiving the request message from the client 410. For example, the action performance unit 451 finds a particular action requested by the client 410 by checking the method contained in the request message and performs that action. If the method corresponds to 'GET' requesting transmission of a resource, the action performance unit 451 retrieves a resource requested by the client 410 through the method, the host and the request URL. If a resource requested by the client 410 is successfully retrieved, the action performance unit 451 sends a retrieved resource and information indicating successful performance of the requested action to the response message creation unit 452. If a resource requested by the client 410 is not successfully retrieved, the action performance unit 451 recognizes the occurrence of an error and sends information indicating the occurrence of an error to the response message creation unit 452. In case of a client error, the error occurrence information may contain a status code from '400' to '415'. In case of a server error, the error occurrence information may contain a status code from '500' to '505'. If an error occurs, the action performance unit 451 not only sends the error occurrence information to the response message creation unit 452, but also sends information about the request message, received from the client 410, to a MobAd enabler 440.

The response message creation unit 452 creates the response message to be sent to the client 410. When receiving a retrieved resource and information indicating successful performance of an action requested by the client 410 from the action performance unit 451, the response message creation unit 452 creates the response message based on a retrieved resource, the reason phrase (e.g., '200(OK)') and the status code classified into a category of 'Successful' among the status codes defined in HTTP. Alternatively, when receiving the error occurrence information from the action performance unit 451 and also receiving advertisement data from the MobAd enabler 440, the response message creation unit 452 creates the response message by combining the error occurrence information and the advertisement data. According to an exemplary embodiment of the present invention, the response message creation unit 452 may create an error message when receiving the error occurrence information from the action performance unit 451, and, when receiving the advertisement data from the MobAd enabler 440, may create the response message by combining the received advertisement data with the error message.

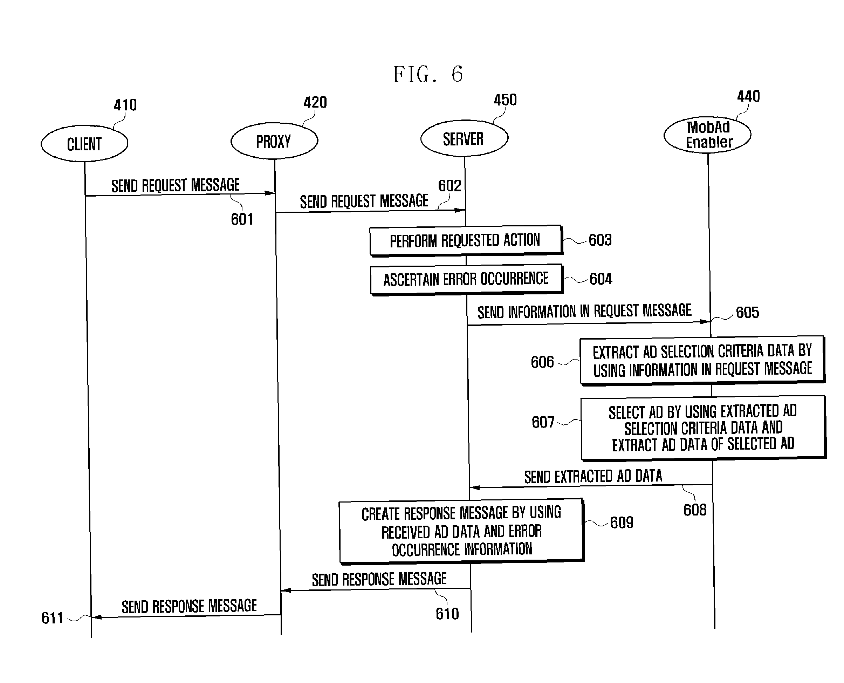

FIG. 6 is a flow diagram illustrating an advertisement providing method according to an exemplary embodiment of the present invention.

Referring to FIG. 6, the client 410 sends the request message to the proxy 420 in order to request the server 450 to perform a given particular action in step 601. The proxy 420 sends the received request message to the server 450 in step 602. The server 450 receives the request message from the proxy 420, and the action performance unit 451 in the server 450 performs a particular action according to the request message in step 603. The action performance unit 451 can find a particular action requested by the client 410 by checking the method contained in the request message. According to the exemplary embodiment shown in FIG. 6, the method is set to `GET' requesting transmission of a resource among methods defined in HTTP. The action performance unit 451 ascertains that the method is set to 'GET', and retrieves a resource requested by the client 410 through the host and the request URL contained in the request message. Such resources may be stored in a database 430, an internal database in the server 450, or a separate external database. If the requested resource is successfully retrieved, the action performance unit 451 sends a retrieved resource and information indicating successful retrieval of the resource to the response message creation unit 452 in the server 450.

If the requested resource is not successfully retrieved, the action performance unit 451 ascertains that an error occurs, and sends the error occurrence information to the response message creation unit 452. For example, when recognizing that there is a problem in the request of the client 410, or when recognizing that it is impossible to perform the request of the client 410, the action performance unit 451 determines that an error occurs. Errors may include a failure by the action performance unit 451 to successfully implement the request of the client 410 due to a problem in the client 410 or the server 450.

The action performance unit 451 ascertains that an error occurs in step 604. The action performance unit 451 sends the error occurrence information to the response message creation unit 452. In addition, the action performance unit 451 sends information contained in the request message to the MobAd enabler 440 in step 605. According to an exemplary embodiment of the present invention, the action performance unit 451 may send the client identifying information, the host or the request URL among information contained in the request message to the MobAd enabler 440.

The MobAd enabler 440 extracts advertisement selection criteria data corresponding to the request message from the advertisement selection criteria database 431 in step 606. According to an exemplary embodiment of the present invention, the MobAd enabler 440 may extract advertisement selection criteria data corresponding to the client identifying information from the advertisement selection criteria database 431. For example, the MobAd enabler 440 may extract advertisement selection criteria data corresponding to the client identifying information from C&PR storing user information. Alternatively, the MobAd enabler 440 may extract advertisement selection criteria data corresponding to the host or the request URL from the advertisement selection criteria database 431. For example, the MobAd enabler 440 may extract advertisement selection criteria data corresponding to the host or the request URL from Ad Metadata including advertisement identifying information or MobAd Rule indicating information about rules for selecting and offering advertisements.

The MobAd enabler 440 selects an advertisement based on the extracted advertisement selection criteria data and extracts advertisement data of the selected advertisement from the advertisement database 432 in step 607. The advertisement database 432 stores substantial data forming an advertisement, so that the MobAd enabler 440 can extract substantial data of the selected advertisement from the advertisement database 432 after selecting an advertisement according to the extracted advertisement selection criteria data. The MobAd enabler 440 sends the extracted advertisement data to the response message creation unit 452 in step 608.

The response message creation unit 452 creates the response message based on the advertisement data received from the MobAd enabler 440 and the error occurrence information received from the action performance unit 451 in step 609. According to an exemplary embodiment of the present invention, the response message creation unit 452 may create an error message when receiving the error occurrence information from the action performance unit 451, and may create the response message by combining the advertisement data with the error message when receiving the advertisement data from the MobAd enabler 440.

The server 450 sends the response message to the proxy 420 in step 610, and the proxy 420 sends the response message to the client 410 in step 611. The client 410 receives the response message from the proxy 420 and displays the received response message. The client 410 displays both error occurrence information and advertisement in a single screen view. Therefore, a user can see advertisement while perceiving the occurrence of any error through the displayed response message.

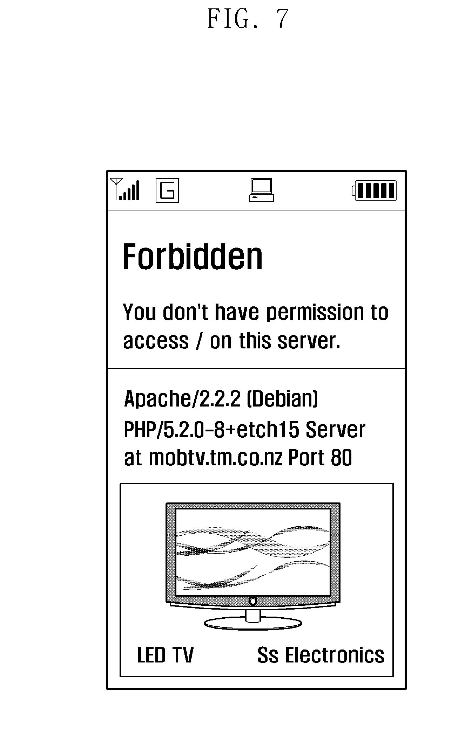

FIG. 7 is an example view illustrating a display screen of a client according to an exemplary embodiment of the present invention.

Referring to FIG. 7, the client displays the error occurrence information (for example, composed of 'Forbidden', 'You don't have permission to access / on this server.', 'Apache/2.2.3(Debian) PHP/5.2.0-8+etch 15 Server at mobtv.tm.co.nz Port 80') at the upper part of the display screen while displaying a selected advertisement at the lower part. If the user's interest field is TV or home appliances, or if the host or request URL of the request message created by the client is related to TV or home appliances, an advertisement for TV may be displayed as shown in FIG. 7.

As discussed hereinbefore, exemplary embodiments of the present invention may improve the frequency of advertising exposure by providing a combined page of the error occurrence message and advertisement.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A method for providing an advertisement, the method comprising:
at a client, sending a request message to a server, the request message requesting an action of the server;
at the server, determining whether an error occurs when performing the action;
if the error occurs, at the server, extracting advertisement data based on information in the request message;
at the server, creating a response message by combining the extracted advertisement data with error occurrence information; and
at the server, sending the response message to the client.

2. The method of claim 1, wherein the extracting of the advertisement data comprises:
extracting advertisement list data corresponding to the information in the request message; and
extracting the advertisement data according to the extracted advertisement list data.

3. The method of claim 1, wherein the extracting of the advertisement data comprises:
if the error occurs, at the server, sending the information in the request message to a Mobile Advertising (MobAd) enabler;
at the MobAd enabler, extracting the advertisement data based on the received information; and
at the MobAd enabler, sending the extracted advertisement data to the server.

4. The method of claim 3, wherein the extracting of the advertisement data at the MobAd enabler comprises:
at the MobAd enabler, extracting advertisement selection criteria data corresponding to the received information;
at the MobAd enabler, selecting an advertisements according to the extracted advertisement selection criteria data; and
at the MobAd enabler, extracting the advertisement data of the selected advertisement.

5. A system for providing an advertisement, the system comprising:
a client for sending a request message to a server, the request message requesting an action of the server;
a database for storing advertisement data; and
a server for receiving the request message from the client, for performing the action according to the received request message, for determining whether an error occurs, for extracting the advertisement data from the database based on information in the request message when the error occurs, for creating a response message by combining the extracted advertisement data with error occurrence information, and for sending the response message to the client.

6. The system of claim 5, wherein the database comprises:
an advertisement list database for storing advertisement list data corresponding to the information in the request message; and
an advertisement database configured for storing substantial advertisement data.

7. The system of claim 6, wherein the server extracts the advertisement list data corresponding to the information in the request message from the advertisement list database, and extracts the advertisement data from the advertisement database according to the extracted advertisement list data.

8. The system of claim 6, further comprising:
a Mobile Advertising (MobAd) enabler for extracting the advertisement data from the database based on the information in the request message,
wherein the server receives the request message from the client, performs the action according to the received request message, determines whether an error occurs, sends the information in the request message to the MobAd enabler if the error occurs, receives the extracted advertisement data from the MobAd enabler, creates a response message by combining the received advertisement data with error occurrence information, and sends the response message to the client.

9. The system of claim 8, wherein the database comprises:
an advertisement selection criteria database for storing advertisement selection criteria data corresponding to the information in the request message; and
an advertisement database for storing substantial advertisement data.

10. The system of claim 9, wherein the MobAd enabler extracts the advertisement selection criteria data from the advertisement selection criteria database, selects one of a plurality of advertisements according to the extracted advertisement selection criteria data, and extracts the advertisement data of the selected advertisement from the advertisement database.

11. A server comprising:
a communication unit for communicating with a client;
an action performance unit for performing an action specified in a request message sent to the server from the client, and for determining that an error has occurred when the action cannot be performed;
a response message creation unit for, when the action performance unit determines that the error has occurred, generating a response message including information about the error and an extracted advertisement, and for transmitting the response message to the client via the communication unit.

12. The server of claim 11, further comprising:
an advertisement extraction unit for extracting the advertisement based on the request message.

13. The server of claim 12, further comprising:
a database for storing advertisement list data and advertisements,
wherein the advertisement extraction unit extracts advertisement list data from the database based on host or request Uniform Resource Locator (URL) information contained in the request message, and extracts the advertisement based on the extracted advertisement list data.

14. The server of claim 12, wherein the advertisement extraction unit extracts advertisement list data from an external database based on host or request Uniform Resource Location (URL) information contained in the request message, and extracts the advertisement from the database based on the extracted advertisement list data.

15. The server of claim 12, wherein the database comprises:
an advertisement list data database for storing advertisement list data; and
an advertisement database for storing advertisements.
